# EUROPEAN PATENT SPECIFICATION

(11) **EP 2 246 107 B1**
(45) Date of publication and mention of the grant of the patent: **24.06.2020**
(21) Application number: 10250438.8
(22) Date of filing: 10.03.2010
(51) Int. Cl.: B01D 46/24, F01N 3/022

(54) **HONEYCOMB STRUCTURE**
WABENSTRUKTUR
STRUCTURE EN NID D'ABEILLE

(30) Priority: 31.03.2009 JP 2009086946
(43) Date of publication of application: 03.11.2010
(73) Proprietor: NGK Insulators, Ltd., Nagoya-shi, Aichi 467-8530 (JP)
(72) Inventor: HIROSE, Shogo, Nagoya City, Aichi-ken, 467-8530 (JP); SAITO, Chika, Nagoya City, Aichi-ken, 467-8530 (JP); HIRAKAWA, Toshihiro, Nagoya City Aichi-ken, 467-8530 (JP)
(74) Representative: Mewburn Ellis LLP

(56) References cited:
- EP-A1- 2 065 575
- EP-A2- 1 384 507
- EP-A2- 1 839 724
- EP-A2- 2 130 606
- WO-A1-2007/126710

## Description

### 1. Field of the Invention

The present invention relates to a honeycomb structure. More specifically, the present invention relates to a honeycomb structure satisfying both quick temperature-rising ability and high thermal capacity at the same time and capable of effectively purifying exhaust gas discharged from a diesel engine or the like.

### 2. Description of Related Art

In accordance with tightening of exhaust gas regulations regarding a diesel engine, there have been proposed various methods using a diesel particulate filter (DPF) for trapping particulate matter (PM) contained in exhaust gas from a diesel engine. Generally, there is employed a method where a catalyst for oxidizing PM is coated on a DPF, and a honeycomb structure having a catalyst coated thereon is mounted in a front portion of the DPF. In the honeycomb structure, by changing NO contained in exhaust gas to NO₂, PM deposited in the DPF is combusted, or, by engine control, post injection is conducted to oxidize uncombusted fuel and raise exhaust gas temperature, thereby combusting PM deposited in the DPF for regeneration of the DPF.

In order to smoothly combust PM deposited in a DPF for regeneration of the DPF, it is necessary to lengthen the time that the aforementioned catalyst coated on the honeycomb structure is at activation temperature as much as possible. However, a diesel engine has low exhaust gas temperature, and temperature of a honeycomb structure does not reach catalyst activation temperature in a low load condition. Even after high load driving, upon drastic transition to low load, temperature of the honeycomb structure rapidly falls and sometimes becomes lower than the catalyst activation temperature, which causes a problem of hindering combustion of PM and/or a problem of incompletion of compulsory regeneration.

In view of the aforementioned problems, there has generally been performed quick raise of the temperature to the catalyst activation temperature by thinning the cell partition walls of the honeycomb structure, raising porosity, or the like, to decrease thermal capacity of the honeycomb structure and improve a temperature rise characteristic of the substrate.

However, though decrease in thermal capacity of the substrate can improve the temperature rise characteristic and make temperature of the catalyst coated on the substrate rapidly reach the catalyst activation temperature, the temperature of the catalyst rapidly becomes lower than the catalyst activation temperature when exhaust gas temperature falls down. In addition, when the thermal capacity of the substrate is increased in order to inhibit temperature fall of the substrate upon the exhaust gas temperature fall, the temperature rise characteristic is deteriorated. Thus, a mutually incompatible relation is shown. That is, it has been difficult to lengthen the time that the catalyst coated on the honeycomb structure is at activation temperature only by changing the partition wall thickness or the porosity of the substrate simply to change the thermal capacity.

In such circumstances, there is disclosed a honeycomb structure constituted of partition walls havingtwo or more kinds of thickness (JP-A-2007-289924). The honeycomb structure disclosed in JP-A-2007-289924 solves the antinomy problem of difficulty in satisfying both the quick temperature-rising ability and the high temperature capacity at the same time and can smoothly complete the combustion of the PM trapped in the filter and effectively purify exhaust gas by mounting the honeycomb structure in a former portion of the filter for trapping particulate matter (PM) discharged from a diesel engine.

In JP-A-2007-289924, there are shown the effect of increasing heat retaining ability due to large thermal capacity in a portion having thick partition walls and the effect of a high temperature rise performance due to small thermal capacity in a portion having thin partition walls. However, there is desired a honeycomb structure having better temperature rise performance and heat retaining ability.

EP 1 384 507 describes a honeycomb structure in which a plurality of through-holes extending in the axial direction are formed by a plurality of partition walls, wherein the plurality of partition walls are constituted by a plurality of partition walls having different thicknesses and, of the plurality of partition walls having different thicknesses, those partition walls having a thickness larger than the average thickness of all partition walls are provided at a higher proportion in a particular portion of the honeycomb structure whole portion having partition walls than in other portion.

EP 2 130 606 was published on 9 December 2009, after the present priority date. It is therefore prior art pursuant to Article 54(3) EPC. It describes a honeycomb structure including a honeycomb unit including a zeolite, an inorganic binder, and plural through-holes intervened by a partition wall, extending in its longitudinal directions and provided in parallel, wherein a thickness of the partition wall is 0.10 mm or more and 0.50 mm or less, and where its cross section perpendicular to the longitudinal directions is dual-partitioned at equally-spaced intervals from its periphery to its center, the thickness of the partition wall in its periphery side area is greater than that in its center side area and an opening ratio of the cross section perpendicular to the longitudinal directions in the center side area is greater than that in the periphery side area.

WO 2007/126710 describes a fast light off flow-through ceramic substrate, formed from a body of ceramic material having axially opposing inlet and outlet ends for receiving and expelling the flow of automotive exhaust gas, respectively. The body contains a network of walls coated with a catalyst that define axially-oriented flow-through cell channels. The average thermal mass (ATM₁) of a first axial region of the walls adjacent to the inlet end is at least 20% less than the average thermal mass (ATM_{TOT}) of all of the walls.

EP 2 065 575 was published on 3 June 2009, after the present priority date. It is therefore prior art pursuant to Article 54(3) EPC. It describes a wall-flow honeycomb filter comprising a ceramic monolith having a plurality of porous walls formed therein, the walls defining a plurality of inlet and outlet cells extending between an inlet end face and an outlet end face of the monolith. The inlet cells are open at the inlet end face and plugged at or near the outlet end face. The outlet cells are open at the outlet end face and plugged at or near the inlet end face. The monolith has a ratio of a combined cross-sectional area of the inlet cells to a combined cross-sectional area of the outlet cells greater than 1. The monolith has at least one inlet cell cluster which contains an N x M group of inlet cells, N and M being integers greater than 1, each inlet cell cluster consisting of a plurality of inlet cells separated by inlet cluster walls.

### Summary of the Invention

The present invention has been made in view of the aforementioned problems and aims to provide a honeycomb structure satisfying both quick temperature-rising ability and high thermal capacity at the same time and capable of effectively purifying exhaust gas discharged from a diesel engine or the like.

According to the present invention, there is provided the following honeycomb structure.

A honeycomb structure having a plurality of cells formed by a plurality of partition walls and extending through in parallel with one another between two end faces, wherein the partition walls are constituted of ceramic, and the cells are formed of the partition walls including first partition walls each having first thickness and second partition walls each having second thickness thinner than the first thickness, and each of the cells has a square shape in a cross section perpendicular to a cell extension direction, and the cells include cells whose three or four sides among the four sides forming the square shape are formed of the first partition walls and cells whose three or four sides among the four sides forming the square shape are formed of the second partition walls, wherein a thin wall portion cell area / thick wall portion cell area ratio, which is the ratio of the thin wall portion cell area, where four sides forming the square shape includes only two sides formed of the first partition walls without facing each other or only one side or less formed of the first partition wall, to the thick wall portion cell area, where all the four sides forming the square shape are formed of the first partition walls, is 2.0 or more and 16 or less.

The present invention can solve the antinomy problem of difficulty in satisfying both quick temperature-rising ability and high thermal capacity at the same time. In addition, it can smoothly complete the combustion of the PM trapped in the filter and effectively purify exhaust gas by mounting the honeycomb structure in a front portion of the filter for trapping particulate matter (PM) discharged from a diesel engine.

### Brief Description of the Drawings

[Fig. 1] Fig. 1 is a perspective view showing an embodiment of a honeycomb structure of the present invention.
[Fig. 2] Fig. 2 is an explanatory view showing the embodiment 1 on the end face on one side of a honeycomb structure.
[Fig. 3] Fig. 3 is an explanatory view showing the embodiment 2 on the end face on one side of a honeycomb structure.
[Fig. 4] Fig. 4 is an explanatory view showing the embodiment 3 on the end face on one side of a honeycomb structure.
[Fig. 5] Fig. 5 is an explanatory view showing the embodiment 4 on the end face on one side of a honeycomb structure.
[Fig. 6] Fig. 6 is an explanatory view showing the end face on one side of a (conventional) honeycomb structure of Comparative Example.

### Reference Numerals

1: partition wall, 1a: first partition wall (thin wall), 1b: second partition wall (thick wall), 2: cell, 10: honeycomb structure

### Detailed Description of the Invention

Hereinbelow, embodiments of the present invention will be described with referring to drawings.

### (Embodiment 1)

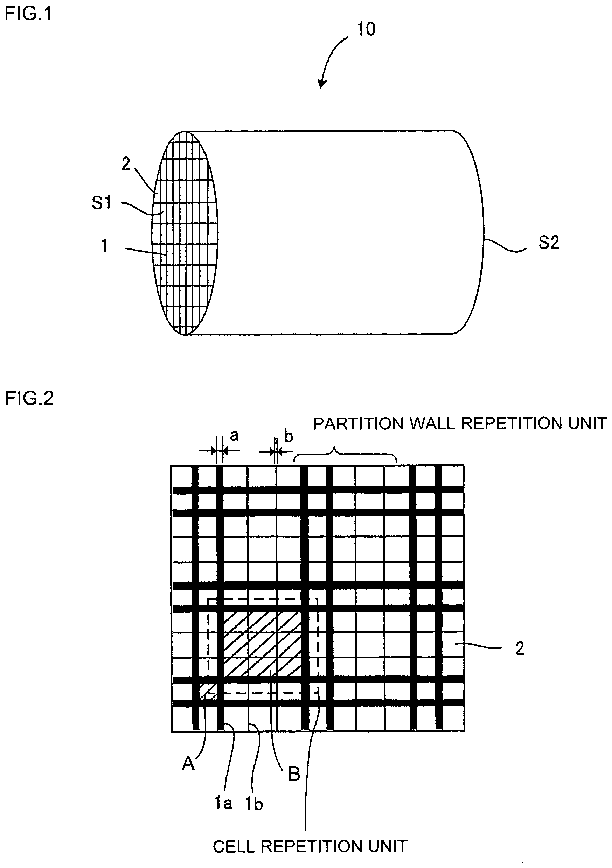

Fig. 1 is a perspective view showing an embodiment of a honeycomb structure of the present invention, and Fig. 2 is an explanatory view showing an embodiment 1 on the end face on one side of the honeycomb structure shown in Fig. 1. As shown in Fig. 1, the honeycomb structure of the present embodiment is a honeycomb structure 10 having a plurality of cells 2 formed of a plurality of partition walls 1 and extending through in parallel with one another between the two end faces S1 and S2. The partition walls 1 are formed of ceramic and, for example, as shown in Fig. 2, the cells 2 are formed by the partition walls 1 including both the first partition walls la having the first thickness and the second partition walls 1b having the second thickness smaller than the first thickness. Each of the cells 2 has a square shape in a cross section perpendicular to a cell extension direction, and the cells 2 include cells 2 whose three or four sides among the four sides forming the square shape are formed of the first partition walls 1a and cells 2 whose three or four sides among the four sides forming the square shape are formed of the second partition walls 1b.

By such constitution, the first partition wall 1a has large thermal capacity, and the gas inflow resistance is high in the cells 2 surrounded by the first partition walls 1a to have a small gas inflow amount, which inhibits heat release due to the inflow of low temperature gas to improve heat retaining ability. In addition, the second partition walls 1b has small thermal capacity, and the gas inflow amount is large in the cells 2 surrounded by the second partition walls 1b to have fast temperature rise due to heat transfer from high temperature gas, which improves temperature rise performance.

Fig. 2 is a partially enlarged view of an end face of the embodiment 1, where the first partition walls (thick partition walls, and hereinbelow sometimes referred to as thick walls) 1a having the first thickness are continuously disposed in two rows, and then the second partition walls (thin partition walls, and hereinbelow sometimes referred to as thin walls) 1b having the second thickness are continuously disposed in two rows. That is, the partition walls 1 are provided with repeating the combination of two rows of the first partition walls 1a and two rows of the second partition walls 1b.

By the constitution as described above, the thin second partition wall 1b portion is first heated upon heating, and the temperature of the catalyst coated on the honeycomb structure 10 quickly reaches the activation temperature to make temperature gradient with the adjacent thick first partition walls 1a steep, and temperature rise in the first partition walls 1a is accelerated due to heat transfer from the thin second partition walls 1b in addition to the heat from the exhaust gas. When the exhaust gas temperature falls, by a phenomenon which is opposite to the aforementioned one, cooling of the thick first partition walls 1a portions becomes slow to be able to lengthen the time that temperature of the catalyst is in the catalyst activation temperature range.

In a honeycomb structure 10 of the present invention, a thin wall portion cell area / thick wall portion cell area ratio, which is the ratio of the thin wall portion cell area, where four sides forming the square shape includes only two sides formed of the first partition walls without facing each other or only one side or less formed of the first partition wall, to the thick wall portion cell area, where all the four sides forming the square shape are formed of the first partition walls, is 2.0 or more and 16 or less.

Specifically, in Fig. 2, the thick wall portion cell area is the area of the region A. That is, in the region A, all the four sides are formed of the thick first partition walls 1a. In addition, the thin wall portion cell area is the area of the region B. There are nine cells 2 constituting the region B. In all the nine cells 2, the sides formed of the thick first partition walls 1a are two sides without facing each other, or only one side or less is formed of the first partition wall 1a. Since the region A is surrounded by the thick walls, gas hardly flows thereinto. On the other hand, many cells 2 in the region B are surrounded by the thin walls 1b, and thereby gas easily flows thereinto. That is, the region A has a high gas inflow resistance and a small gas inflow amount. The region B has a low gas inflow resistance and a large gas inflow amount. A large gas inflow amount in the region B means that much heated gas passes and means that it is easily heated. Though the region A has a small gas inflow amount, it has good heat retaining ability because it is surrounded by thick walls.

Such constitution can allows much gas to flow into the cells 2 surrounded by the second partition walls 1b having a good temperature rise performance, thereby further increasing the temperature rise performance. In addition, in the present embodiment, as shown in Fig. 2, the thickness of the partition walls 1 is constituted to have a certain pattern having regularity in a cross section perpendicular to the central axis of the cells 2. Such constitution can securely exhibit the effect of being able to easily design a honeycomb structure and the effect of being able to satisfy both the quick temperature-rising ability and high thermal capacity at the same time.

In addition, in the present embodiment, as shown in Fig. 2, the partition walls 1 are constituted of two kinds of partition walls 1a and 1b having different thickness, and the two kinds of the partition walls 1a and 1b having different thickness are dispersed and disposed in one carrier. Such constitution can simply and securely exhibit the effect of being able to satisfy both the quick temperature-rising ability and the high thermal capacity at the same time.

In the present embodiment, the partition walls 1 constituting the honeycomb structure 10 are constituted of at least one kind of ceramic selected from the group consisting of cordierite, alumina, mullite, and lithium aluminosilicate (LAS).

### (Embodiment 2)

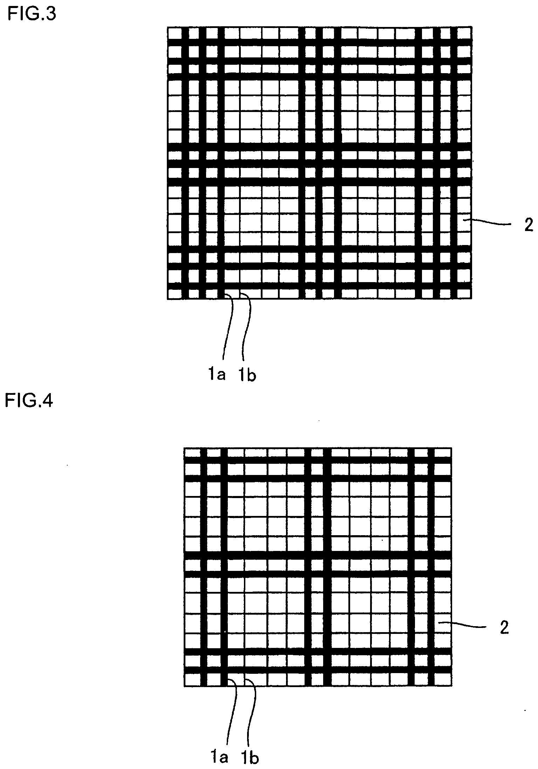

Next, the honeycomb structure 10 of the embodiment 2 will be described. Fig. 3 is a partially enlarged view of an end face of the honeycomb structure 10 of the embodiment 2. As shown in Fig. 3, the first partition walls (thick partition walls) 1a having the first thickness are continuously disposed in three rows, and then the second partition walls (thin partition walls) 1b having the second thickness are continuously disposed in three rows. That is, the partition walls 1 are provided with repeating the combinations of three rows of the first partition walls 1a and three rows of the second partition walls 1b.

### (Embodiment 3)

Next, an example of different row number disposition, where the row number of the first partition walls 1a and that of the second partition walls 1b are different, will be described. Fig. 4 is a partially enlarged view of an end face of the honeycomb structure 10 of the embodiment 3. As shown in Fig. 4, the first partition walls (thick partition walls) 1a having the first thickness are disposed in two rows continuously, and then the second partition walls (thin partition walls) 1b having the second thickness are continuously disposed in three rows. That is, the partition walls 1 are provided with repeating the combinations of two rows of the first partition walls 1a and three rows of the second partition walls 1b.

### (Embodiment 4)

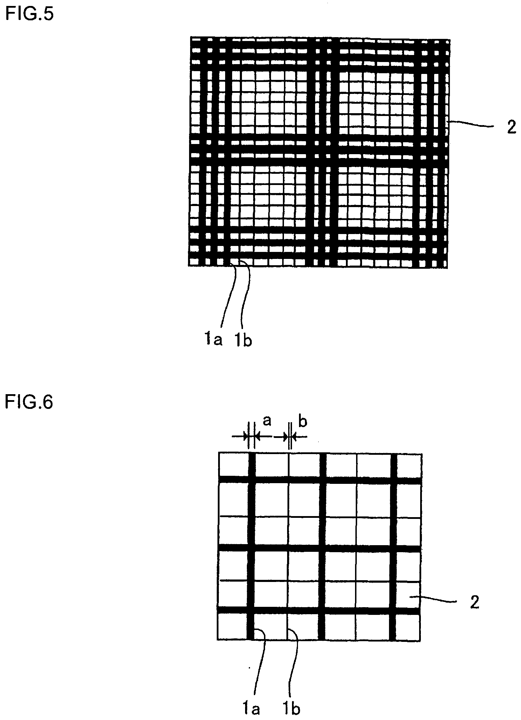

Fig. 5 is a partially enlarged view of an end face of the honeycomb structure 10 of the embodiment 4. As shown in Fig. 5, the first partition walls (thick partition walls) 1a having the first thickness are disposed in three rows continuously, and then the second partition walls (thin partition walls) 1b having the second thickness are continuously disposed in five rows . That is, the partition walls 1 are provided with repeating the combinations of three rows of the first partition walls 1a and five rows of the second partition walls 1b.

According to the present invention, there is provided a catalyst-coated honeycomb structure where a catalyst is coated on any of the aforementioned honeycomb structures 10 (not limited to the aforementioned embodiments). Here, examples of the catalyst include an oxidation catalyst, a NOx adsorber reduction catalyst, and a SCR catalyst. The catalyst coat amount is preferably 100 to 300 g/L.

In addition, any of the aforementioned honeycomb structures 10 of the aforementioned catalyst-coated honeycomb structure may be used as a purification apparatus mounted in a front portion of a filter. Specifically, it can be used as a honeycomb for a DOC (Diesel Oxidation Catalyst) by being disposed in a front portion of the filter of the purification apparatus of a diesel-powered automobile. Since the exhaust gas temperature of a diesel-powered automobile is low, there is a case that the catalyst loaded on the DOC does not work effectively. As a technique to improve it, a technique to realize quick temperature rise and slow temperature fall is important, and a honeycomb structure 10 of the present invention can quickly rise temperature and has heat retaining ability. Also, in a ternary catalyst used for a gasoline-powered automobile, since quick temperature rise and slow temperature fall can be realized, by the use of it as a purification apparatus for a gasoline-powered automobile, further exhaust gas cleaning can be realized.

Hereinbelow, the present invention will be described in more detail on the basis of Examples. However, the present invention is by no means limited to the Examples.

### (Example 1)

To obtain cordierite after firing, raw materials such as talc, kaolin, alumina, and silica were blended at a predetermined compounding ratio, and a binder, a surfactant, and water were added to them at a predetermined compounding ratio, followed by mixing them together to obtain kneaded clay. Regarding the cordierite forming raw material, though the particle size, the components, and the like finally influence on porosity, thermal expansion coefficient, and the like, they can suitably be selected by a person of ordinary skill in the art, and also the binder and the surfactant can suitably determined. The kneaded clay was subjected to extrusion forming using an extruder having a die where the slit width was adjusted in consideration of the shrinkage ratio in the drying and firing stages so as to obtain the cell structure shown in Table 1 after firing. Thus, there was manufactured a honeycomb structure 10 having a diameter of 100 mm, a length of 100 mm, and an almost square cell 2 shape after drying and firing. Example 1 is a honeycomb structure 10 where two rows of the partition walls 1a (thick wall) and two rows of the partition walls 1b (thin wall) are repeated (see Fig. 2).

The honeycomb structure 10 obtained above was subjected to canning in an exhaust gas pipe of a 2.0 liter gasoline engine. Exhaust gas temperature right behind the honeycomb structure 10 upon running in an exhaust gas regulation mode (JC-08) was measured to obtain an average gas temperature. The average gas temperature means the average gas temperature between the region A and the region B (see Fig. 2). Incidentally, for the temperature measurement, there was used a K tipe sheathed thermocouple having a thickness of 0.5 mm was used, and the measurement position was a position in the center of the honeycomb carrier (honeycomb structure 10). An exhaust gas sample was taken from the pipe connected with the exhaust gas pipe during a regulation mode run and stored in a bag. After the completion of the run, the stored exhaust gas was passed through an analyzer to measure HC emission (according to JC-08 regulation). The purification performance was obtained as a proportion of the inverse of the HC emission.

### (Examples 2 to 5 and Comparative Examples 1 to 4)

Examples 2 to 5 were obtained in the same manner as in Example 1 except that the cell structures were changed as shown in Table 1 (Regarding Example 5, see Fig. 4). Comparative Example 1 was a honeycomb structure where all the partition walls 1 have the same thickness. Comparative Examples 2 to 4 were obtained in the same manner as in Example 1 except that the cell structures were changed as shown in Table 1 (Regarding Comparative Example 2, see Fig. 6). Incidentally, in all of Examples, the partition walls 1a (thick walls) and the partition walls 1b (thin walls) were linearly formed.

The average gas temperature and the purification performance are shown in Table 1. The average gas temperature and the purification performance are shown with the honeycomb structure of Comparative Example 1 as the standard. Incidentally, the area B/A is the thin wall portion cell area / thick wall portion cell area ratio described in the above embodiments. In addition, the OFA ratio shows the ratio of the open area of one cell surrounded by thick walls (first partition walls la) on the four sides to the open area of one cell surrounded by thin walls (second partition walls 1b) on the four sides.

| | Thickness a of partition wall 1a | Thickness b of partition wall 1b | a/b | Area B/A | Disposition of partition walls1a and 1b | | | Cell number | OFA ratio | Average gas temperature | Purification performance (HC) |
|---|---|---|---|---|---|---|---|---|---|---|---|
| | | | | | Number of partition walls 1a and 1b | Repetition Unit | | | | | |
| | (mm) | (mm) | (-) | (-) | | Partition wall 1a | Partition wall 1b | (cpsi) | (-) | (-) | (-) |
| Comp. Ex. 1 | 0.203 | 0.203 | 1.00 | - | Uniform | - | - | 400 | - | 1.00 | 1.00 |
| Comp. Ex. 2 | 0.165 | 0.089 | 1.86 | - | Same | One row | One row | 400 | 0.937 | 1.07 | 1.05 |
| Example 1 | 0.203 | 0.064 | 3.20 | 9.0 | Same | Two rows | Two rows | 400 | 0.782 | 1.23 | 1.20 |
| Example 2 | 0.165 | 0.089 | 1.86 | 9.0 | Same | Two rows | Two rows | 400 | 0.937 | 1.27 | 1.20 |
| Example 3 | 0.165 | 0.089 | 1.86 | 2.78 | Same | Four rows | Four rows | 400 | 0.937 | 1.11 | 1.10 |
| Example 4 | 0.165 | 0.089 | 1.86 | 2.25 | Same | Five rows | Five rows | 400 | 0.937 | 1.06 | 1.07 |
| Comp. Ex. 3 | 0.165 | 0.089 | 1.86 | 1.96 | Same | Six rows | Six rows | 400 | 0.937 | 0.79 | 0.80 |
| Comp. Ex. 4 | 0.165 | 0.089 | 1.86 | 25 | Different | Two rows | Four rows | 400 | 0.937 | 1.02 | 1.00 |
| Example 5 | 0.165 | 0.089 | 1.86 | 16.0 | Different | Two rows | Three rows | 400 | 0.937 | 1.07 | 1.06 |

As shown in Table 1, the partition walls 1 were constituted to have different thickness, and the thin wall portion cell area / thick wall portion cell area (area B/A) ratio was controlled to be 2.0 to 16.0 (Examples 1 to 5), and thereby rise of the average gas temperature and improvement of purification performance could be confirmed.

A honeycomb structure of the present invention is particularly effective for purifying exhaust gas from diesel engine, where exhaust gas temperature is relatively low and can effectively used as a substrate for a SCR (selective catalytic reduction) catalyst for purifying NOx in exhaust gas and as a diesel oxidation catalyst besides a honeycomb structure for being disposed in a DPF front portion. In addition, also in a gasoline engine, where exhaust gas temperature is relatively high, it is effectively used for dealing with exhaust gas.

## Claims

1. A honeycomb structure (10) having a plurality of cells (2) formed by a plurality of partition walls (1) and extending through in parallel with one another between two end faces (S1, S2),
wherein the partition walls (1) are constituted of ceramic, and the cells are formed of the partition walls (1) including first partition walls (1a) each having first thickness and second partition walls (1b) each having second thickness thinner than the first thickness, and
each of the cells (2) has a square shape in a cross section perpendicular to a cell extension direction, and the cells (2) include cells whose three or four sides among the four sides forming the square shape are formed of the first partition walls (1a) and cells whose three or four sides among the four sides forming the square shape are formed of the second partition walls (1b);
wherein a thin wall portion cell area / thick wall portion cell area ratio, which is the ratio of the thin wall portion cell area, where four sides forming the square shape includes only two sides formed of the first partition walls (1a) without facing each other or only one side or less formed of the first partition wall (1a), to the thick wall portion cell area, where all the four sides forming the square shape are formed of the first partition walls (1a), is 2.0 or more and 16 or less.

## Patentansprüche

1. Wabenstruktur (10) mit einer Vielzahl von Zellen (2), die durch eine Vielzahl von Trennwänden (1) gebildet werden und sich parallel zueinander zwischen zwei Endflächen (S1, S2) erstrecken,
wobei die Trennwände (1) aus Keramik bestehen und die Zellen aus den Trennwänden (1) gebildet werden, einschließlich erster Trennwände (1a) mit jeweils einer ersten Dicke und zweiter Trennwände (1b) mit jeweils einer zweiten Dicke, die dünner ist als die erste Dicke, und
wobei jede der Zellen (2) eine quadratische Form in einem zur Zellerstreckungsrichtung normalen Querschnitt aufweist, und die Zellen (2) Zellen umfassen, deren drei oder vier Seiten von den vier Seiten, die die quadratische Form bilden, aus den ersten Trennwänden (1a) gebildet sind, sowie Zellen umfassen, deren drei oder vier Seiten von den vier Seiten, die die quadratische Form bilden, aus den zweiten Trennwänden (1b) gebildet sind;
wobei ein Verhältnis Zellfläche mit dünnwandigem Abschnitt / Zellfläche mit dickwandigem Abschnitt, das das Verhältnis der Zellfläche mit dünnwandigem Abschnitt, wo vier Seiten, die die quadratische Form bilden, nur zwei Seiten, die aus den ersten Trennwänden (1a) gebildet sind, ohne einander zugewandt zu sein, oder nur eine Seite oder weniger, die aus der ersten Trennwand (1a) gebildet ist, umfassen, zu der Zellfläche mit dickwandigem Abschnitt ist, wo alle vier Seiten, die die quadratische Form bilden, aus den ersten Trennwänden (1a) gebildet sind, 2,0 oder mehr und 16 oder weniger beträgt.

## Revendications

1. Structure en nid d'abeille (10) ayant une pluralité de cellules (2) formées par une pluralité de parois de séparation (1) et s'étendant à l'intérieur en parallèle les unes avec les autres entre deux faces d'extrémité (S1, S2),
dans laquelle les parois de séparation (1) sont constituées de céramique, et les cellules sont formées des parois de séparation (1) comprenant des premières parois de séparation (1a) ayant chacune une première épaisseur et des secondes parois de séparation (1b) ayant chacune une seconde épaisseur inférieure à la première épaisseur, et
chacune des cellules (2) possède une forme carrée au niveau d'une section transversale perpendiculaire à une direction d'extension de cellule, et les cellules (2) comprennent des cellules dont trois ou quatre côtés parmi les quatre côtés formant la forme carrée sont formés des premières parois de séparation (1a), et des cellules dont trois ou quatre côtés parmi les quatre côtés formant la forme carrée sont formés des secondes parois de séparation (1b) ;
dans laquelle un rapport entre la surface de cellule de la partie à paroi fine et la surface de cellule de la partie à paroi épaisse, qui est le rapport entre la surface de cellule de la partie à paroi fine, où quatre côtés formant la forme carrée comprennent uniquement deux côtés formés des premières parois de séparation (1a) sans se faire face, ou un seul côté ou moins formé de la première paroi de séparation (1a), et la surface de cellule de la partie à paroi épaisse, où les quatre côtés formant la forme carrée sont formés des premières parois de séparation (1a), est de 2 ou plus et de 16 ou moins.
